# EUROPEAN PATENT APPLICATION

(11) **EP 4 393 303 A1**
(43) Date of publication of application: **03.07.2024**
(21) Application number: 23217731.1
(22) Date of filing: 18.12.2023
(51) Int. Cl.: A01K 31/14, H02J 7/35

(54) **BIRD BOX**

(30) Priority: 29.12.2022 US 202263435844 P
(71) Applicant: Gardenature Limited, Clacton on Sea, Essex CO15 4BD (GB)
(72) Inventor: FREEDMAN, Richard Alan, Clacton on Sea, CO15 4BD (GB)
(74) Representative: HGF

(57) **Abstract**

There is herein described a bird box system which comprises a camera for monitoring bird activities inside the bird box. Specifically, the bird box apparatus comprises a solar panel for powering the camera's battery which monitors the birds inside the bird box. The bird box may also contain a translucent window, for allowing light to pass through, but to also prevent predators from looking into the bird box.

## Description

### FIELD OF THE INVENTION

The present invention relates to a bird box system which comprises a camera for monitoring bird activities inside the bird box. Specifically, the bird box apparatus comprises a solar panel for powering the camera's battery which monitors the birds inside the bird box. The bird box may also contain a translucent window, for allowing light to pass through, but to also prevent predators from looking into the bird box.

### BACKGROUND OF THE INVENTION

A bird box, also known as a nesting box or bird house, is a small wooden or plastic structure that is designed to provide a place for birds to build a nest and raise their young. A bird box typically has a hole or entrance on the front, which is large enough for the birds to enter and exit, but small enough to keep out larger animals or predators. The inside of the box is usually hollow and may have a bed of straw or other material to provide insulation and a comfortable environment for the eggs and chicks. Some bird boxes are designed to attract specific species of birds, while others are more general and may be used by a variety of species.

Bird boxes are often placed in gardens, parks, and other outdoor areas to provide a habitat for birds and to encourage them to stay in the area. They are particularly popular with home owners, who like to provide a safe space for birds to reproduce in their garden.

Providing bird boxes is an easy way to help birds in the user's garden. Different birds prefer different sized nest boxes and entrance holes. This is largely dictated by safety and shelter. Birds may face all sorts of dangers, especially when they are trying to sleep, or when they have vulnerable eggs, chicks or youngsters. A hole that is just big enough for them to squeeze through means nothing larger can reach them, and they are also well protected from anything the weather can throw at them.

Some requirements of bird boxes are therefore that the bird box needs to be a natural environment, preferably wood, and free from embellishments/decorations. Decorations are unnatural for the birds and can attract predators.

Birds usually find a bird box or nest in the autumn, with the view to preparing in the winter, and nesting and hatching in the spring. Birds will rear their young inside the birdbox, and it is fascinating to watch the chicks hatch and grow.

However, birds like privacy when nesting, and so they often chose dark and hard to access locations to nest in. It is for this reason that birds cannot be disturbed during nesting season. However, by far the most important restriction is that is it illegal in most countries, to disturb nesting birds. This restriction most commonly affects gardening/construction works. For example, tree surgeons may not remove branches on a tree if there are any adjacent nesting birds that would get disturbed.

The implication for this with nest box camera systems according to the art is that once you have placed your nest box in the garden, and birds have started nesting in it, you may not disturb them for any reason.

A modern way to monitor birds without disturbing them inside a bird box is to use a camera. Cameras can be used to watch the birds inside the bird boxes, whilst importantly not disturbing the birds.

However, as bird boxes are often located in gardens and not close to buildings which have mains power supply, the standard cameras used on bird boxes often need large cable runs to connect them to the mains. As many homes do not have external power sockets, holes need to be drilled through external walls, which often necessitates a professional installation. There are no known battery powered cameras which are for use inside a bird box, as is disclosed in the present invention.

Furthermore, the nesting pair will enter/leave the bird box several hundred times per day while they are building their nest. The camera system must not interfere with their access/egress. In particular it should be free from wires that could entangle the birds, or be chewed by them.

Existing camera systems are not designed with the 'do not disturb' restriction in mind. In creating a battery powered camera nest box system, the applicant had to ensure that the camera could function for an entire nesting season without being touched or disturbed.

Most battery cameras have been developed with the CCTV home security market in mind. They are marketed as lasting for several months on a single charge.

However, this depends on them being used only for exception recording. That is, they are placed in an area where there is not expected to be any movement and they are then activated by movement to switch on the camera and record. For example, they are placed by the side of a house and are only activated for a few moments if an intruder should walk past them.

Using cameras according to the art, and with birds going continually going back and forth into the bird house and with months of testing different battery types/camera circuitry/software settings, the applicant could only get cameras according to the art to last 1-3 days.

Connecting a standard solar panel to the camera also did not solve the issue. During months of testing, with many different solar panels, the applicant did not achieve sufficient charging of the battery camera to be certain that it could last an entire season without interference.

The present invention provides a solution to the above-mentioned issues.

Furthermore, another issue with videoing inside a bird box is that there is not a lot of natural light inside the box, as the birds like to nest in darker spaces.

One proposed solution to this in the prior art is to use LED lights or another form of artificial light. This unnatural light source has been shown to be confusing to the birds, and as such, is highly discouraged from being used within the bird caring community. Most birding associations, including the RSPB, are strongly against the introduction of artificial light into bird boxes and academic studies have shown that it has a profound effect not only on the adult birds' health but also on the quality of the eggs and chicks.

Not using artificial light poses issues in itself, as it makes it difficult to get good quality video/stills footage. Especially as a key feature of garden birds is their beautiful, rich, colourings.

Despite the scientific evidence of harm to the birds, most companies who supply a camera for a bird box use artificial light. They hope to limit harm by including a light sensor to reduce the incidence of the light being on at night, as this causes the most harm.

One other proposed solution is to use a clear/transparent window on the birdbox, to allow natural light to enter into the bird box. This provides light throughout the day as required. However, there are also disadvantages with this technique.

Firstly, as the window is transparent, it means predators can see through the window and into the bird house. This can scare the chicks inside, and also encourages predators to try and access the birdhouse. For these reasons, transparent windows are highly discouraged by bird specialists.

Secondly, the bright light from the sun can cause the camera quality to significantly vary throughout the day as the sun passes through the sky. A bright spot caused by the window aperture is formed, and passes through the bird box in line with the sun's arc. This bright spot can also cause glare to form on the camera lens.

There is therefore a need to provide a bird box which has camera capability, but which does not need charged, and thus disturbing the birds inside.

Furthermore, there is a need to provide a lighting system for the bird box which overcomes the issues described above with a transparent window.

It is therefore an object of at least one aspect of the present invention to provide an improved bird box, which overcomes the above-mentioned problems.

### SUMMARY OF THE INVENTION

According to a first aspect of the present invention there is provided a bird box system comprising: a bird box, suitable for nesting birds; a solar panel, comprising a solar panel battery; a camera, comprising a rechargeable camera battery; and a display device; wherein the camera is housed inside the bird box, and the rechargeable camera battery is operably connected to the solar panel battery, whereby the solar panel is configured to charge the rechargeable camera battery; and wherein the display device is operably connected to the camera, to display visual and audio data from the camera.

The solar panel battery may be removable from the solar panel and may be rechargeable. This may allow the rechargeable camera battery to run 24/7, as the solar panel battery may be removed and charged via a mains connection, whilst the rechargeable camera battery is still powering the camera. The solar panel battery may be removable to allow the battery to be charged inside a house, which may be distant from the bird box system. The solar panel battery may be charged by the solar panel, and wherein the solar panel battery may be used to supply energy to the rechargeable camera battery

The display device may be connected to the camera via WiFi. The display device may also be connected via Bluetooth or any other wireless form of communication.

The display device may be a mobile telephone or tablet. The display device may be any form of mobile device, such as a laptop or iPad etc. The display device may be any device which is capable of connecting to the camera, and which can display audio and video.

The rechargeable camera battery may have around 5200mA of storage, and the solar panel battery may have around 15600mA of storage. This may allow the solar panel battery to recharge the camera battery multiple times.

The camera may comprise an infrared light source for enabling the camera to work in low light conditions. This may allow the camera to capture video at night. As the infrared light source is not visible to the birds, the birds are not disturbed, according to regulations.

The camera may comprise a light level sensor and a motion sensor. These sensors may be used to control the white balance of the camera sensor, and may be used to alert the user of the camera when motion is detected.

The bird box may comprise a camera tray assembly, which may be located in the roof area of the bird box, suitable for housing the camera. The camera tray assembly may be removable from the bird box. The camera tray assembly may house the camera and associated battery and wires in a location which is not reachable by the birds inside the bird box. This may prevent the birds from being snagged on the cables, or from chewing into the cables.

The camera tray assembly may comprise a camera aperture which is orientated such that the camera captures the inside of the bird box in a plan-view orientation. This may be ideal for viewing the birds in the bird box as they hatch and nest. The location of the camera aperture may vary depending on the model of bird box.

The bird box may comprise a translucent window, which allows light into the bird box, but prevents predators from seeing into the bird box. This is another important aspect of the present invention, which keeps the birds inside the bird box comfortable and safe, whilst crucially allowing day light into the bird box.

The translucent window may be located on a side wall near the roof of the bird box, so as not to cause glare on the camera lens inside the bird box. There may be more than one translucent window on the bird box. The translucent window may be located anywhere on the bird box.

The rechargeable camera battery and the solar panel battery may be connected via waterproof cables, to allow the device to be used outside. One of the aims of the invention is to create a device which is very low maintenance, and provides continuous video and audio to the user. A waterproof system enables this.

According to another aspect of the present invention, there is described a method of maintaining charge in a rechargeable camera battery in a bird box system according to any preceding described system, wherein the rechargeable battery is operably connected to a solar panel according to any preceding claim; wherein the energy from the sun is used to charge the solar panel battery, which is used to charge the battery of the rechargeable camera battery.

The solar panel battery can also be charged via mains electricity.

The display device may alert the user when the rechargeable camera battery or the solar panel battery is low on energy. The display device may use an in-house application, which is designed especially for use with the bird box system according to the present invention.

### BRIEF DESCRIPTION OF THE DRAWINGS

Embodiments of the present invention will now be described, by way of example only, with reference to the following figures:
Figure 1 is a bird box system according to an embodiment of the present invention, the system comprising a bird box, a display device, a camera (not shown) and a solar panel;
Figure 2 is an example of a typical camera which can be used with the system in Figure 1;
Figure 3 is an example of a typical solar panel which can be used with the system in Figure 1;
Figure 4 is an example bird box which can be used with the system in Figure 1, the bird box comprising an translucent window according to the present invention; and
Figure 5 is an example camera tray assembly which may be located inside the bird box of Figures 1 and 4.

### DETAILED DESCRIPTION

Generally speaking, the present invention relates to a bird box system for recording the activities of birds within a bird box, in a novel and inventive manner.

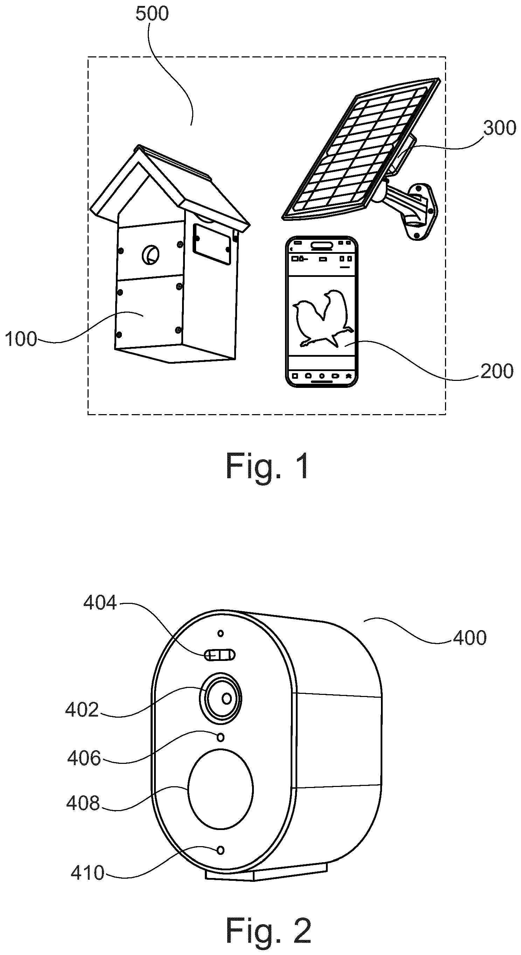

Figure 1 is a bird box system 500 according to an embodiment of the present invention, the system comprising a bird box 100, a display device 200, a camera 400 (not shown) and a solar panel 300. The system 500 may comprise more features than those shown.

The display device 200 may be a mobile telephone, any mobile device, or any device which is connectable to the internet. The display device 200 may include an application which is specially designed for the bird box system 500. The application may include features which allow the user to live stream video and audio from the camera 400.

Figure 2 is an example of a typical camera 400 which can be used with the system 500 in Figure 1. The camera 400 shown comprises a HD video camera 402, night vision infrared LEDs 404, light level sensor 406, a motion sensor 408, and a microphone 410. The night vision LEDs 404 allow the camera to work at night, allowing the user to monitor the birds whilst it is dark. Crucially, the infrared LEDs 404 do not produce any visible light, and thus does not disturb the birds.

The camera 400 also has motion detection which can alert the user as to when there is activity inside the bird box 100. The camera 400 may have a HD sensor, allowing it to record at 25 frames per second.

The camera 400 may also have WiFi capability, allowing the camera to stream video and audio directly to the user's phone or WiFi device. The WiFi signal may have a range of around 20 metres, depending on the environment and performance of the house router.

Importantly, the camera 400 is powered via a rechargeable battery. The camera can therefore be coupled with a solar panel 300, which can charge the battery inside the camera 400, meaning that the user does not need to manually recharge the battery and risk disturbing the nesting birds. This is an important feature of the present invention.

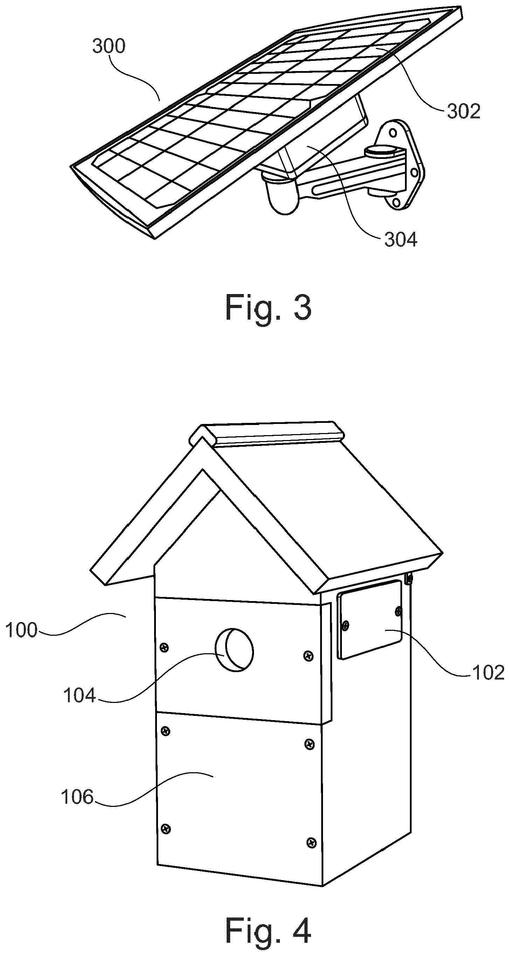

Figure 3 is an example of a typical solar panel 300 which can be used with the system 500 in Figure 1. The solar panel 300 comprises photovoltaic (PV) cells 302 which are used to convert the energy from the Sun's rays to the solar panel's battery 304. In normal use, the solar panel 300 charges it's own battery 304, which then in turn is used to supply energy to the battery on the camera 400. The battery may be a lithium-ion battery 304, or any other type of suitable rechargeable battery.

If it is cloudy outside and there is not sufficient sunlight, the solar panel's battery 304 can be taken inside and charged using the electrical mains. After the solar panel's battery 304 has charged off the mains, it can then be taken back to the bird box system 500 to continue to charge the camera battery. This allows the camera to run continuously via battery power, all whilst not disturbing the birds. This is an important aspect of the present invention.

For example, in one embodiment, the camera's battery is 5200mA, and the solar panel's battery 304 is 15600mA. This means the solar panel's battery can support the camera's battery for many cycles before it needs charges itself.

Figure 4 is an example bird box 100 which can be used with the system 500 in Figure 1, the bird box 100 comprising an translucent window 102 according to the present invention. The bird box 100 can be made of any suitable material. This particular embodiment is made from western red cedar wood.

The bird box 100 can be supplied with various sized entrance holes 104. For example, the entrance holes 104 may be 28mm or 32mm in diameter. The different sized holes allow the box to be suitable for various types of garden bird, such as blue tits, coal tits, marsh tits, great tits, house sparrows, and robins.

The bird box 100 may have a removable front panel 106, which allows for easy cleaning.

The bird box 100 may have a translucent window 102. This feature is an important aspect of the invention, as it overcomes problems with systems according to the art in a non-obvious manner.

As discussed previously in the application, a standard bird box either has no windows and contains an artificial light source, or a clear window. These have the drawbacks of artificial light which confuses the birds, or clear windows which scares birds and allows predators to see in.

The translucent window 102 proposed in this embodiment of the bird box 100 solves the above-mentioned problems in a non-obvious manner. The translucent window 102 allows for light to pass into the bird box 100, whilst preventing the birds from seeing out, and from predators from seeing inside. This allows the user of the camera to view the birds with natural light during the day.

Furthermore, there is a synergistic effect with the camera 400, in that the translucent window 102 creates a diffuse light inside the bird box 100. This prevents any bright disks forming on the camera 400 lens, which is a common issue for photographic lenses in direct sunlight. In addition, as the light inside the bird box 100 is diffuse, 'bright spots' do not form on the birds inside the box, which can affect the white balance of the camera's sensor due to the extreme brightness of the sun, in contrast with the darkness of the box.

To enable high quality imagery, the translucent windows 102 for the bird box 100 are important features. Their level of opacity has been carefully calibrated such that birds cannot see out of them (to ensure they feel secure), predators cannot see in, and the light that gets through is sufficient for excellent quality photography. The window material also helps eliminate sun spots or 'rainbow rings' that can often be present on video when the sun hits the lens at specific angles.

In combination with the solar panel 300 battery combination, the translucent window 102 creates a comfortable environment for the birds nesting inside the box. The combination of not disturbing them whilst charging the batteries of the camera 400, and the translucent window 102 is not suggested or disclosed in the prior art.

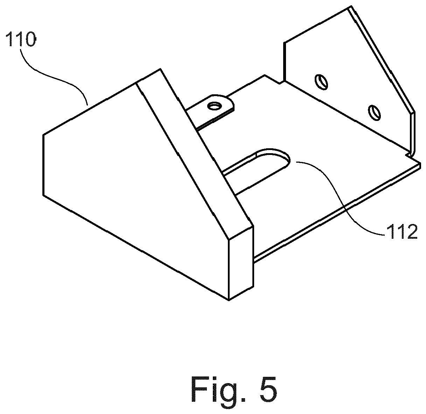

Figure 5 is an example camera tray assembly 110 which can be located inside the bird box 100 of Figure 1. The camera tray assembly 110 is designed to fit inside the roof of the bird box 100, where the profile of the top of the camera tray assembly 110 matches the ridge of the bird box 100.

The camera tray assembly 110 comprises a camera aperture 112, which is shaped to accommodate the camera facing downwards in a plan-view orientation, to capture the activities of the birds from above.

Adding a solar panel battery 304, capable of being charged via mains in addition to being charged by the solar panel 300, enabled the applicant to offer the robustness required. By siting the camera in a tray above the nesting chamber, and having a cable exiting the bird house that then connected to the solar panel/battery pack 304 through a waterproof detachable connector, the applicant was able to solve the issue.

This way if the camera 400 runs out of charge, and there has been insufficient sun to recharge the battery pack 304 via the solar panel 300, the user can detach the solar panel battery pack 304 and plug it in to mains power to fully charge it. Crucially, without disturbing the nesting birds.

Whilst specific embodiments of the present invention have been described above, it will be appreciated that departures from the described embodiments may still fall within the scope of the present invention. For example, any suitable type of camera, solar panel, or bird box may be used in combination with the features of the invention.

## Claims

1. A bird box system comprising:
a bird box, suitable for nesting birds;
a solar panel, comprising a solar panel battery;
a camera, comprising a rechargeable camera battery; and
a display device;
wherein the camera is housed inside the bird box, and the rechargeable camera battery is operably connected to the solar panel battery, whereby the solar panel is configured to charge the rechargeable camera battery; and
wherein the display device is operably connected to the camera, to display visual and audio data from the camera.

2. A bird box system according to claim 1, wherein the solar panel battery is removable from the solar panel and is rechargeable.

3. A bird box system according to claim 2, wherein the solar panel battery is charged by the solar panel, and wherein the solar panel battery is used to supply energy to the rechargeable camera battery.

4. A bird box system according to any preceding claim, wherein the display device is connected to the camera via WiFi.

5. A bird box system according to any preceding claim, wherein the display device is a mobile telephone or tablet.

6. A bird box system according to any preceding claim, wherein the rechargeable camera battery has around 5200mA of storage, and the solar panel battery has around 15600mA of storage.

7. A bird box system according to any preceding claim, wherein the camera comprises an infrared light source for enabling the camera to work in low light conditions.

8. A bird box system according to any preceding claim, wherein the camera comprises a light level sensor and a motion sensor.

9. A bird box system according to any preceding claim, wherein the bird box comprises a camera tray assembly, which is located in the roof area of the bird box, suitable for housing the camera.

10. A bird box system according to claim 9, wherein the camera tray assembly comprises a camera aperture which is orientated such that the camera captures the inside of the bird box in a plan-view orientation.

11. A bird box system according to any preceding claim, wherein the bird box comprises a translucent window, which allows light into the bird box, but prevents predators from seeing into the bird box.

12. A bird box system according to claim 11, wherein the translucent window is located on a side wall near the roof of the bird box, so as not to cause glare on the camera lens inside the bird box.

13. A bird box system according to any preceding claim, wherein the rechargeable camera battery and the solar panel battery are connected via waterproof cables, to allow the device to be used outside.

14. A method of maintaining charge in a rechargeable camera battery in a bird box system according to any preceding claim, wherein the rechargeable battery is operably connected to a solar panel according to any preceding claim;
wherein the energy from the sun is used to charge the solar panel battery, which is used to charge the battery of the rechargeable camera battery.

15. A method according to claim 14, wherein the solar panel battery can also be charged via mains electricity.

16. A method according to claim 14 or 15, wherein the display device alerts the user when the rechargeable camera battery or the solar panel battery is low on energy.
